# EUROPEAN PATENT SPECIFICATION

(11) **EP 3 903 942 B1**
(45) Date of publication and mention of the grant of the patent: **06.08.2025**
(21) Application number: 19906203.5
(22) Date of filing: 15.11.2019
(51) Int. Cl.: B02C 18/10, B02C 18/24, A47J 43/044, A47J 43/08

(54) **PULL-TYPE SHIFT TRANSMISSION SYSTEM AND FOOD PROCESSOR**
ZIEHSCHALTGETRIEBE UND LEBENSMITTELVERARBEITUNGSMASCHINE
SYSTÈME DE TRANSMISSION À DÉCALAGE DE TYPE À TRACTION ET ROBOT DE CUISINE

(30) Priority: 27.12.2018 HK 18116666; 28.08.2019 CN 201910799936
(43) Date of publication of application: 03.11.2021
(73) Proprietor: Wong, Yan Kwong, Kowloon Bay Kowloon, Hong Kong (CN)
(72) Inventor: YEUNG, Hiu Fung, Kwun Tong Kowloon, Hong Kong (HK); WONG, Hung Tai, Kwun Tong Kowloon, Hong Kong (HK); WONG, Yan Kwong, Kowloon, Hong Kong (CN)
(74) Representative: Cabinet Chaillot
(86) International application number: PCT/IB2019/059812
(87) International publication number: WO 2020/136465

(56) References cited:
- CN-A- 107 398 938
- CN-U- 202 681 711
- CN-U- 207 155 929
- CN-U- 207 271 364
- KR-A- 20090 101 618
- US-A- 4 854 718
- US-A- 5 201 263
- US-A1- 2008 164 357
- US-A1- 2016 290 303

## Description

### TECHNICAL FIELD

The present invention relates to a transmission system, particularly to a non-electric pull type transmission system.

### BACKGROUND ART

An existing pull type transmission system is mainly composed of a single round block or a plurality of coaxial round blocks with different diameters that are pieced together, and can be used in a manual pull type food chopping processor. A common manual pull type food chopping processor has only a single output mode. When the transmission ratio needs to be changed, for example when the torque, acceleration and deceleration are changed, the pull type transmission system composed of a plurality of round blocks that are pieced together will adjust the gears through a shift lever to achieve gear shift.

The foregoing existing pull type transmission system has at least the following disadvantages:
The output transmission ratio cannot be adjusted conveniently at any time.

For example, in a food chopper, when larger and harder food is cut in the beginning, a larger force is required instead of a higher speed, but when some small food is cut, a higher speed is required.

Some existing food choppers cannot change the transmission ratio. Even if the transmission ratio is changeable in some equipment, it is necessary to stop the pulling and adjust the structure (such as the positions of the gears or the coaxial round blocks) before it can be used continuously and it is impossible to use continuous actions to process the food, causing inconvenience in use.
US2016290303A1 discloses a starting device for an internal combustion engine, the starting device comprising: a hub configured to drivingly engage an internal combustion engine when the hub is rotated in a first direction; a pulley interconnected with the hub by a spring; a shaft on which the pulley and hub are mounted independently rotatable; a flexible member attached to and coiled about the pulley; and the spring coupled at a first end to the hub and at a second end to the pulley, wherein the pulley is rotated in the first direction when the flexible member is pulled and unwound, wherein the spring is arranged to act on the hub during start, wherein the pulley comprises a recess arranged to receive the flexible member, which recess substantially has the shape of a conical helix having a first end with a first radius and a second end with a second radius, larger than the first radius; and wherein the flexible member is attached to the pulley at the second end.
KR20090101618A discloses an automatic starter for small size engine comprises a housing, a reel, a rope, an elastic member, and a transmission member. The reel is combined to be rotatable inside the housing and has a conical spiral on the outside surface. The rope is wound along the conical spiral and has a handle on one end protruded out of the housing. The elastic member accumulates the torque which is generated when pulling the rope. The transmission member delivers the torque of the reel to the engine only in starting.
US2008164357A1 discloses a hand-pulling food cutter/mixer, comprising a container, a lid on said container and a processing implement in said container, characterized in that said lid comprises an upper lid the underside surface of which has a downward shaft, and a hand-pulling driving mechanism fixed to said upper lid and positioned around said shaft, and the lower part of said hand-pulling driving mechanism has a protruding upright axis around which the processing implement is positioned.
CN202681711U discloses a hand-pulled garlic chopper, which comprises a body, a middle cover and an upper cover in which a chopping device is arranged, wherein the chopping device comprises a blade rotating mechanism, a transmission gear and a pulling mechanism; the blade rotating mechanism comprises a rotating shaft, a lower knife handle is arranged on the lower part of the rotating shaft, and a lower blade and a lower stirring plate are arranged on the lower knife handle; a middle knife handle is arranged in the middle of the rotating shaft, and a middle blade is arranged on the middle knife handle; an upper knife handle is arranged on the upper part of the rotating shaft, and an upper stirring plate is arranged on the upper knife handle; a pin is arranged on the bottom inner wall of the body and matched with a middle hole of the rotating shaft; a connecting tenon is arranged on the head of the rotating shaft; the middle bottom of the transmission gear is provided with a connecting hole; the connecting tenon is matched with the connecting hole; the middle cover is provided with a central hole; the bottom of the transmission gear is arranged in the central hole; the transmission gear is connected with the middle cover by a fixing ring; the pulling mechanism comprises a rope hole formed in the upper cover; a pull rope penetrates through the rope hole; the outer end of the pull rope is connected with a handle; a spring chamber is formed in the upper cover, and a coil spring is arranged in the spring chamber and is in contact with a reel; the pull rope is wound in a groove of the reel; a gear ring is arranged below the reel and engaged with the transmission gear; and a gear ring limiting plate is arranged in the upper cover and is in contact with a gear ring limiting rib.

### SUMMARY OF THE INVENTION

The main technical problem that the present invention solves is to provide a pull type transmission system and a food processor convenient for switching rotating gears.

The present invention adopts the following technical means.

A pull type transmission system is provided, which comprises a pull mechanism, the pull mechanism comprising a coaxial column, the coaxial column is formed by connecting rotary discs with different diameters, and planes connecting the rotary discs with different diameters are connecting faces; the pull mechanism is provided with a rope tying position, the rope tying position is arranged on a side face of the pull mechanism, and a pull rope is connected to the pull mechanism through the rope tying position at one end and is wound around one of the rotary discs; the transmission system is further provided with a guide structure, the guide structure comprises a limit component allowing the pull rope to pass through and limiting the pull rope, and a control module controlling the up and down movement of the limit component, and the pull rope passes through the limit component and the position of the limit component is controlled by the control module, thereby controlling the position of the pull rope; and the pull mechanism is connected to a resilience mechanism providing a resilience force and is capable of retracting the pull rope to a different rotary disc after the pull rope is pulled out.

The coaxial column is formed by connecting two rotary discs with different diameters. The diameter of the upper rotary discs is larger, and the diameter of the lower rotary discs is smaller.

The connecting faces extend outward and are provided with flange protruding outward.

The rope tying position is arranged on the flange.

The rope tying position is adjacent to the connecting faces and located above or below the connecting faces.

The rope tying position is a structure that runs through the rotary discs, and forms a through slot inside the rotary discs, one end of the pull rope is connected to one end of the slot, and the other end of the pull rope passes through the slot and sticks out of the rotary discs.

The rope tying position is a structure that runs through the rotary discs, and the pull rope extends outward from the rotary discs.

The resilience mechanism is a set of coil springs and arranged above or below the pull mechanism

A food processor is provided, which comprising the foregoing pull type transmission system, the pull mechanism is connected to a transmission mechanism, and the transmission mechanism is connected to a food processing device that is operated in a rotating manner.

The food processor is further provided with a bottom cover, the center of the bottom cover is connected to a resilience mechanism, the bottom cover is connected to the pull mechanism, the pull mechanism is sheathed with an upper cover that covers the pull mechanism, the upper cover comprises a top surface at the top and a side wall on the side face, the bottom edge of the side wall is connected to the bottom cover, and the side wall of the upper cover is provided with a guide groove allowing the pull rope to pass through.

The guide groove is arranged at same level with the rope tying position, the guide groove is a longitudinal guide groove, and the length of the guide groove spans the rotary discs with different diameters; the outer end of the pull rope is connected to a handle, and the length of the handle is greater than the length of the longitudinal guide groove.

The transmission mechanism is a rotating shaft or a transmission shaft connected to a one-way gear, and the upper part of the transmission shaft passes through the top surface of the upper cover and is connected to the food processing device.

The control module comprises a button shaft, below the button shaft is a second shaft, the diameter of the second shaft is smaller than the diameter of the button shaft, a third shaft is provided at a certain distance below the second shaft, the third shaft and the second shaft have the same diameter, and the second shaft and the third shaft are sheathed with a spring; a platform is connected below the third shaft, and the lower end of the spring presses against the platform; the limit component is a laterally arranged perforated sheet body, one side of the perforated sheet body is connected to the button shaft, and the pull rope passes through a hole of the perforated sheet body.

The control module comprises a button shaft, the button shaft is coaxially sheathed with a conduit slot, a thin shaft is connected below the button shaft, the thin shaft is sheathed with a spring, the top of the spring presses against the bottom of the button shaft, and the bottom of the spring presses against a bottom platform on the inner side of the conduit slot; the limit component is a laterally arranged perforated sheet body, one side of the perforated sheet body is connected to the thin shaft, and the pull rope passes through a hole of the perforated sheet body.

The control module is a button structure of a ball pen, and comprises a button shaft, the button shaft is coaxially sheathed with a conduit slot with a serrated bottom, the button shaft is sheathed with a spring used for reset, and a movable column that moves up and down is connected below the button shaft through a spring; the guide structure is a laterally arranged perforated sheet body, one side of the perforated sheet body is connected to the movable column, and the pull rope passes through a hole of the perforated sheet body.

The control module comprises a knob shaft, above the knob shaft is a knob, a shaft body is connected below the knob, a first guide structure is provided outside the shaft body, the shaft body is sheathed with a conduit slot, the inner side of the conduit slot is provided with a second guide structure that matches the first guide structure, and by relying on the interaction between the first guide structure and the second guide structure, the knob shaft is rotated to drive the conduit slot to move up and down; the guide structure is a laterally arranged perforated sheet body, one side of the perforated sheet body is connected to the conduit slot, and the pull rope passes through a hole of the perforated sheet body. The first guide structure is a threaded or tapered convex bone or groove, and the second guide structure is a threaded or tapered groove or convex bone.

A food processor is provided, which comprises the foregoing pull type transmission system, the pull mechanism is connected to a transmission mechanism, and the transmission mechanism is connected to a food processing device that is operated in a rotating manner; the transmission mechanism is a rotating shaft or a transmission shaft connected to a one-way gear, the food processing device is connected below the transmission shaft, and above the transmission shaft is an outer cover, and the upper plane of the outer cover is provided with a through hole to expose the guide structure.

The present invention has the following beneficial effects. The present invention provides a brand-new non-electric pull type transmission system, which can be used as a core structure to make various kinds of food processors. The non-electric pull type transmission system has a simple structure. The corresponding rotating gear can be changed through simple up-down pulling actions without having to shut down and replace equipment or interrupt the pulling operation, making the use more convenient.

### BRIEF DESCRIPTION OF THE DRAWINGS

Fig. 1a is a schematic view of a pull mechanism according to the present invention, with a pull rope wound around a rotary disc with a smaller diameter.
Fig. 1b is a structural schematic view of a pull mechanism according to the present invention when the pull mechanism is pulled downward after the pull mechanism is sheathed with an upper cover.
Fig. 1c is a schematic view of a pull mechanism according to the present invention, with a pull rope wound around a rotary disc with a larger diameter.
Fig. 1d is a structural schematic view of a pull mechanism according to the present invention when the pull mechanism is pulled upward after the pull mechanism is sheathed with an upper cover.
Fig. 2 is a sectional structural schematic view of an embodiment of a pull type transmission system according to the present invention. In the figure, the pull rope is in a tightened state and wound around a rotary disc with a smaller diameter.
Fig. 3 is a sectional structural schematic view of an alternative embodiment of a pull type transmission system according to the present invention. In the figure, the pull rope is in a tightened state and wound around a rotary disc with a larger diameter.
Fig. 4a is a structural three-dimensional schematic view of a pull mechanism according to the present invention, with the pull rope not connected.
Fig. 4b is a structural three-dimensional schematic view of a pull mechanism according to the present invention, with the pull rope not connected.
Fig. 4c is an A-A sectional structural schematic view in Fig. 4b.
Fig. 5 is an exploded structural schematic view of a pull type transmission system according to the present invention as a food processor, with the food processing device not connected.
Fig. 6 is an exterior structural three-dimensional schematic view of a food processor according to the present invention.
Fig. 7 is a structural schematic view of a guide groove provided for the upper cover according to the present invention.
Fig. 8a is a front structural schematic view of the first embodiment of a guide mechanism according to the present invention.
Fig. 8b is a three-dimensional structural schematic view of the first embodiment of a guide mechanism according to the present invention.
Fig. 8c is a left structural schematic view of Fig. 8a.
Fig. 9 is a three-dimensional structural schematic view of the second embodiment of a guide mechanism according to the present invention.
Fig. 10a is a front structural schematic view of the third embodiment of a guide mechanism according to the present invention.
Fig. 10b is a three-dimensional structural schematic view of the third embodiment of a guide mechanism according to the present invention.
Fig. 10c is a left structural schematic view of Fig. 10a.
Fig. 11a is a front structural schematic view of the fourth embodiment of a guide mechanism according to the present invention.
Fig. 11b is a three-dimensional structural schematic view of the fourth embodiment of a guide mechanism according to the present invention.
Fig. 11c is a left structural schematic view of Fig. 10a.
Fig. 11d is a three-dimensional structural schematic view of another pattern of the fourth embodiment of a guide mechanism according to the present invention.
Fig. 12a is a front structural schematic view of a pull type transmission system according to the present invention, which is used on the upper side of the food processor.
Fig. 12b is a three-dimensional structural schematic view of a pull type transmission system according to the present invention, which is used on the upper side of the food processor.
Fig. 12c is a left structural schematic view of Fig. 12a.

### DETAILED DESCRIPTION

The present invention discloses a pull type transmission system, which comprises a pull mechanism 1, the pull mechanism 1 at least comprises a coaxial column, the coaxial column is formed by connecting rotary discs 11 with different diameters, and planes connecting the rotary discs 11 with different diameters are connecting faces 12.

The pull mechanism 1 is provided with a rope tying position 2, the rope tying position 2 is arranged on a side face of the pull mechanism 1, and the pull rope 3 is connected to the pull mechanism 1 through the rope tying position 2 at one end and is wound around the rotary discs 11; and the pull mechanism is connected to a resilience mechanism 4 providing a resilience force and is used for retracting the pull rope 3 after the pull rope 3 is pulled out.

The resilience mechanism here generally can be a coil spring (tension spring) and is arranged above or below the pull mechanism (in this embodiment, the resilience mechanism is below the pull mechanism). The resilience mechanism is a common existing structure. In the present invention, in the initial state the pull rope is wound around the rotary discs and the coil spring is in a slack state; after the pull rope is pulled out, the coaxial column rotates, and the coil spring becomes in a tightened state; after the pull rope is released, the coil spring resumes a slack state due to the effect of its own elastic force, in other words, the pull rope is provided with a resilience force to drive the rotary discs to rotate and re-wind the pull rope around the rotary discs. Due to the different diameters of the rotary discs, the pull rope can be pulled diagonally upward or downward during use. When the pull rope rebounds after being pulled out, the pull rope can be freely wound around the rotary discs with different diameters. When the pull rope is pulled again, because the distance between the pull rope and the axis is different, different torques can be generated, which leads to different twisting forces and speeds under different rotation modes.

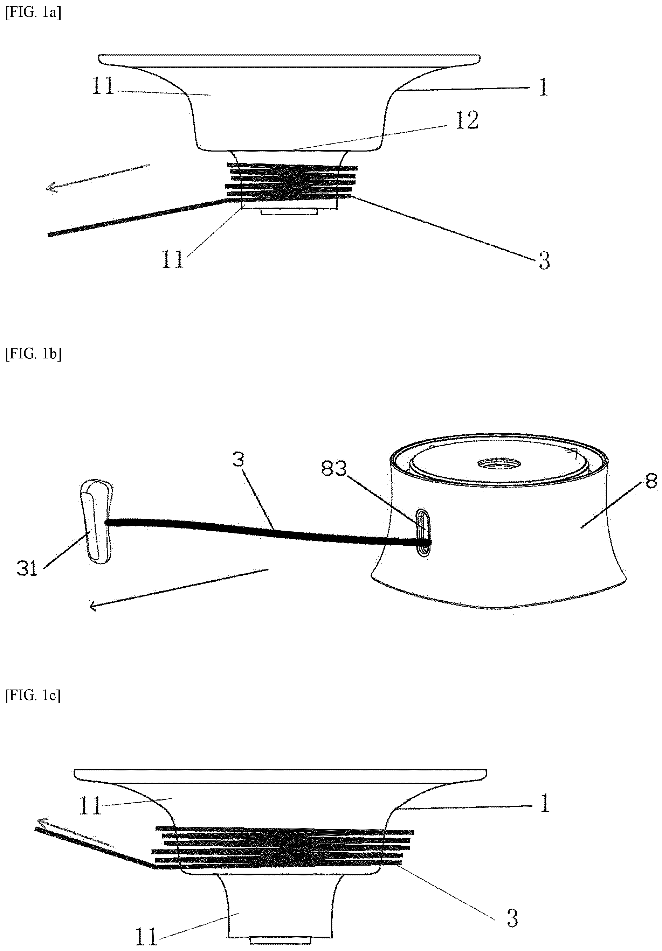

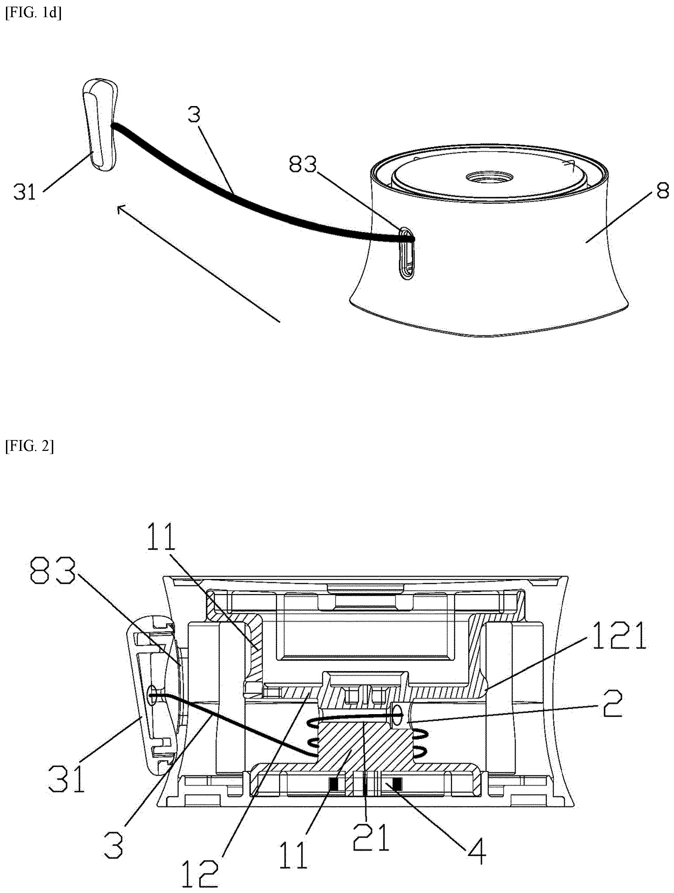

In a preferred embodiment, the coaxial column is formed by connecting two rotary discs 11 with different diameters, as shown in Fig. 1a and Fig. 1c, where the upper rotary disc 11 has a larger diameter and the lower rotary disc 11 has a smaller diameter. The upper rotary disc with a larger diameter can output a greater power, and the lower rotary disc with a smaller diameter can output a higher speed. Alternatively, the upper rotary disc can have a smaller diameter and the lower rotary disc can have a larger diameter. Considering ergonomics, the downward/horizontal pulling action is more suitable for high-speed rotation, so it is preferred that the lower rotary disc has a smaller diameter and the upper rotary disc has a larger diameter. As shown in Fig. 1a and Fig. 1b, when being pulled downward, the pull rope is fixed on the rotary disc with a smaller diameter and brings out a higher-speed rotation output. As shown in Fig. 1c and Fig. 1d, when being pulled upward, the pull rope is fixed on the rotary disc with a larger diameter and brings out a larger-torque rotation output.

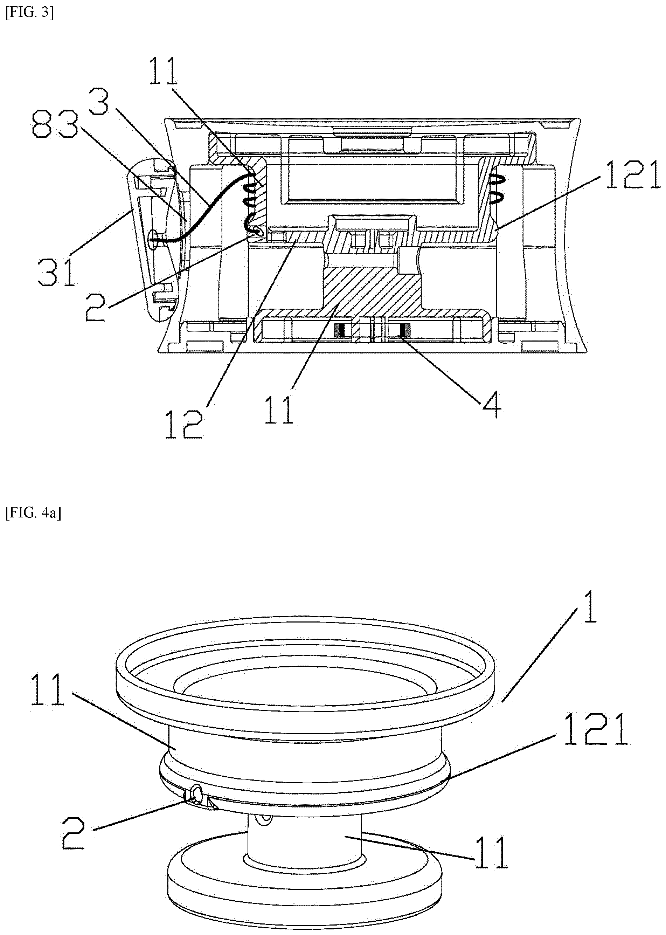

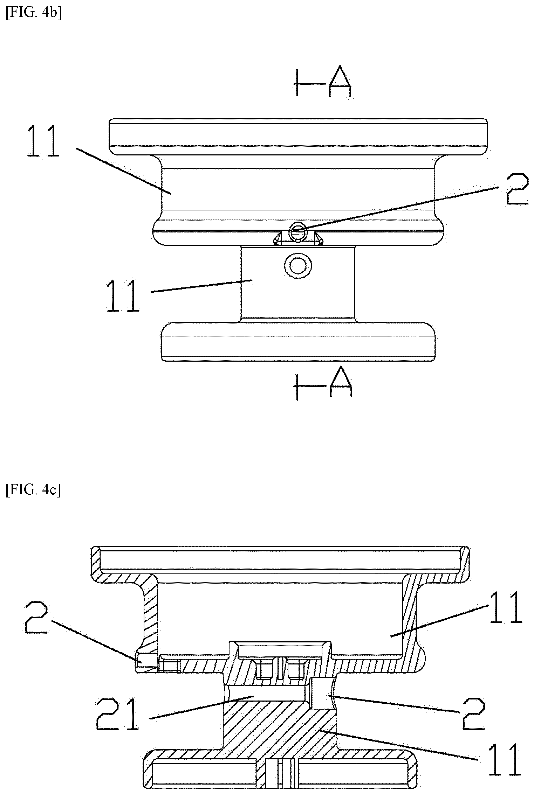

The rope tying position 2 may be arranged adjacent to the connecting face 12. As shown in Fig. 2, the rope typing position is arranged on the lower rotary disc 11 and adjacent to the connecting face. Of course, the rope typing position may also be arranged on the upper rotary disc and adjacent to the connecting face. Further, as shown in Fig. 2, Fig. 3 and Fig. 4a to Fig. 4c, the connecting face 12 may also extend outward and be provided with flange 121 slightly protruding outward. As shown in Fig. 2 and Fig. 4a to Fig. 4c, the rope tying position 2 may be arranged on the flange 121. These structures all can achieve upward or downward pull of the pull rope, so that the pull rope 3 is wound around the corresponding rotary disc, and the slightly protruding structure of the flange can help tighten the pull rope when the pull rope is retracted, and can also help the pull rope to shuttle smoothly through parts of different diameters. Fig. 4a to Fig. 4c show two different rope tying positions, and the pull rope can be fixed to the corresponding rope tying position according to requirements.

As shown in Fig. 2, in order to better retract the pull rope 3, the rope tying position 2 can be a structure that runs through the rotary discs 11, and forms a through slot 21 inside the rotary discs 11, and one end of the pull rope 3 is connected to one end of the slot, and the other end of the pull rope passes through the slot 21 and sticks out of the rotary discs 11. In this figure, the pull rope and the rope tying position are both arranged on the lower rotary disc. In addition, the rope tying position 2 can also be arranged inside the rotary discs 11, one end of the pull rope 3 is connected to the rope tying position 2 inside the rotary discs 11, and the other end of the pull rope sticks out of the rotary discs 11.

In actual use, the foregoing pull type transmission system is generally used in a food processor.

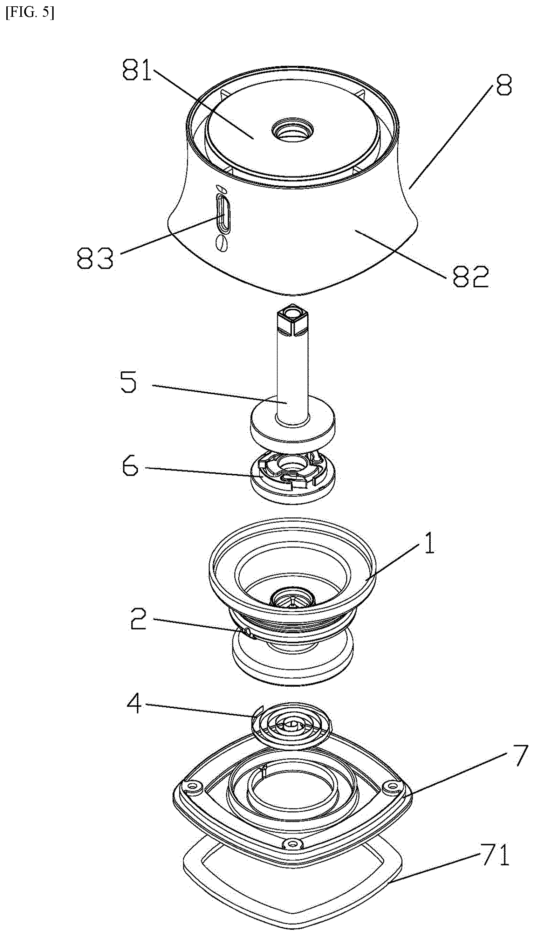

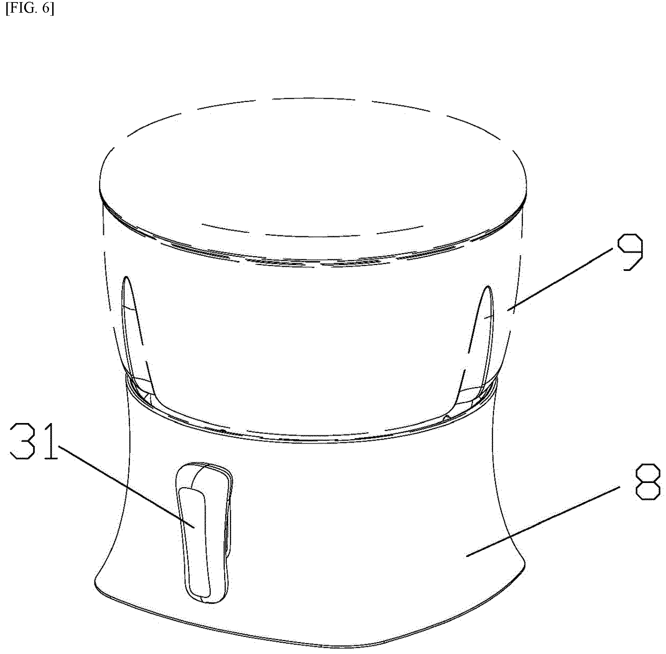

The present invention further discloses a food processor. As shown in Fig. 5 and Fig. 6, the food processor comprises the foregoing pull type transmission system, the pull mechanism 1 is connected to a transmission mechanism, and the transmission mechanism is connected to a food processing device that is operated in a rotating manner. The pull mechanism drives the transmission mechanism through rotation, and the transmission mechanism then drives the food processing device. The transmission mechanism can be an ordinary transmission shaft 5. The rotation of the pull mechanism drives the transmission shaft 5 to rotate, thereby further driving the food processing device. In this embodiment, as shown in the figure, it can be a transmission shaft 5 with a one-way gear set 6, and the transmission shaft 5 is connected to a food processing device. When the coil spring drives the pull mechanism to rotate back, the coil spring will not transmit the rotating power to the transmission shaft, so that the transmission shaft continues to rotate according to inertia, without affecting the operation of the food processing device. The food processing device here can be any existing device that achieves the corresponding functions by means of rotation, for example, a chopper, an agitator or a dehydrator, as shown in the figure, which is a schematic structural view of a container with a food processing device. The transmission structure of this transmission shaft, the transmission structure combined with a one-way gear set, and the structure and function of the corresponding food processing device are all prior art structures and products, and can be implemented by those of ordinary skill in the art.

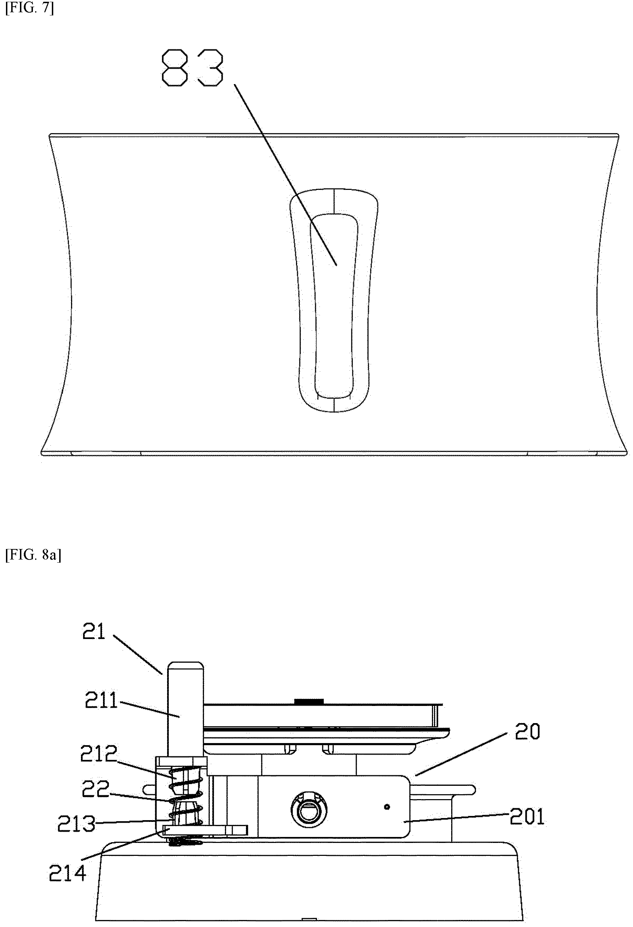

The food processor according to the present invention is further provided with a bottom cover 7, a non-slip mat 71 can be arranged under the bottom cover, and the center of the bottom cover 7 is connected to a resistance mechanism 4. Here, the resistance mechanism 4 is a tension spring (coil spring), and the bottom cover 7 is connected to the pull mechanism 1. The pull mechanism 1 is sheathed with an upper cover 8 that covers the pull mechanism 1. The upper cover 8 comprises a top surface 81 at the top and a side wall 82 on the side face. The upper part of the transmission shaft 5 passes through the top surface 81 of the upper cover and is connected to the food processing device. The lower edge of the wall 82 is connected to the bottom cover 7, and the side wall 82 of the upper cover 8 is provided with a guide groove 83 allowing the tying rope to pass through, as shown in Fig. 7. The guide groove 83 is arranged at same level with the rope tying position 2 (as shown in Fig. 2 and Fig. 3). The guide groove 83 is a longitudinal guide groove, and the length of the guide groove 83 spans the rotary discs 11 with different diameters. Accordingly, the outer end of the pull rope 3 is connected to a handle 31, and the length of the handle 31 is greater than the length of the longitudinal guide groove 83. As shown in Fig. 1b and Fig. 1d, the handle 31 can be used to pull the pull rope more conveniently and comfortably, the guide groove 83 may also play a role in limiting the pull rope, and the handle 31 can be stuck on the outside of the guide groove 83 after the pull rope 3 rebounds.

As shown in Fig. 6, which is an exterior structural schematic view of a food processor according to the present invention, the upper cover contains a pull type transmission system, and the food processing device is connected above the upper cover. The structure internally has a blade and a stirring tool in general and externally is a transparent or opaque outer cover 9.

Further, the pull type transmission system according to the present invention may also be additionally provided with a guide structure. The purpose of the guide structure is to pull the pull rope, so as to guide the pulling direction and horizontal height of the pull rope and more accurately and conveniently wind the pull rope around the rotary discs with different diameters. The guide structure comprises a limit component 20 allowing the pull rope to pass through and limiting the pull rope, and a control module 21 controlling the up and down movement of the limit component 20, the pull rope 3 passes through the limit component 20 and the position of the limit component 20 is controlled by the control module 21, thereby controlling the position of the pull rope 3.

Ordinary simple mechanical structures all can achieve this function. Several specific embodiments are given below.

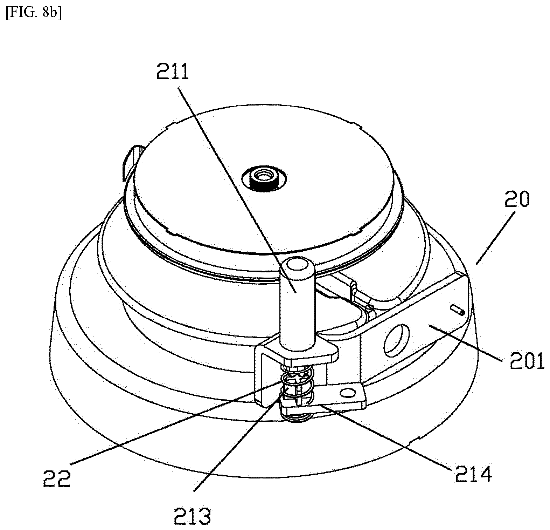

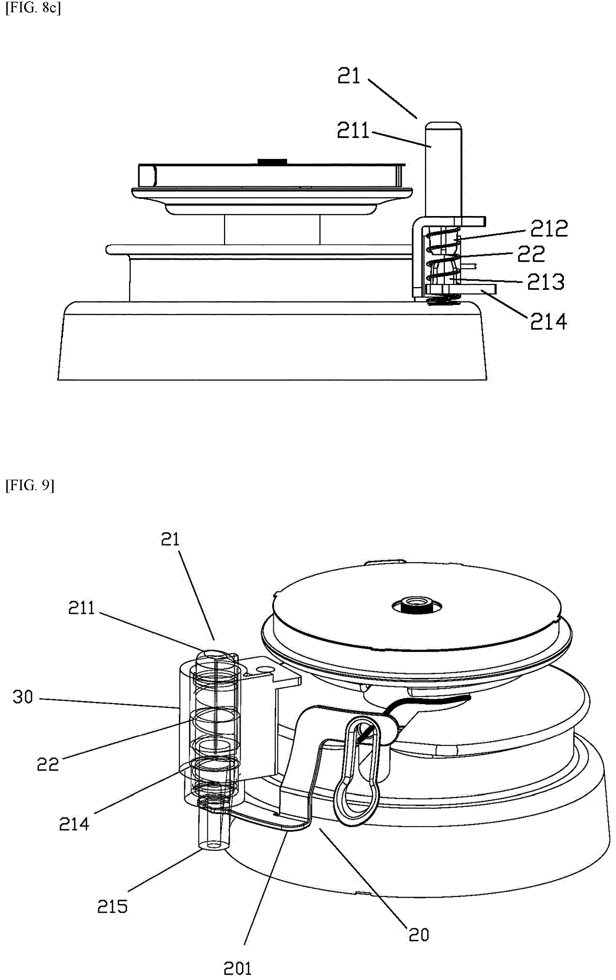

Fig. 8a to Fig. 8c show a button-type spring reset solution. The control module 21 comprises a button shaft 211, below the button shaft 211 is a second shaft 212, the diameter of the second shaft 212 is smaller than the diameter of the button shaft 211, a third shaft 213 is provided at a certain distance below the second shaft 212, and the third shaft 213 and the second shaft 212 have the same diameter. The shafts here can be cylinders, cross-shaped columns, or columns in other shapes. The second shaft 212 and the third shaft 213 are sheathed with a spring 22; a platform 214 is connected below the third shaft 213, and the lower end of the spring 22 presses against the platform 214; the limit component 20 is a laterally arranged perforated sheet body 201, one side of the perforated sheet body 201 is connected to the button shaft 211, and the pull rope 3 passes through a hole of the perforated sheet body. When the button shaft is pressed and moves up and down during use, the perforated sheet body is driven to move up and down. Since the pull rope has passed through a perforated sheet, the pull rope can move up and down with the limit component, so that the pull rope can be wound around the rotary discs with different diameters more accurately and conveniently, while the spring has a reset effect, and rebounds and resets when the button shaft is released.

Similar to the structures shown in Fig. 8a to Fig. 8c, Fig. 9 also shows a button-type spring reset solution. The control module 21 comprises a button shaft 211, the button shaft 211 is coaxially sheathed with a conduit slot 30, a thin shaft 215 is connected below the button shaft 211, the thin shaft 215 is sheathed with a spring 22, the top of the spring 22 presses against the bottom of the button shaft 215, and the bottom of the spring presses against a bottom platform 214 on the inner side of the conduit slot 30; the limit component 20 is a laterally arranged perforated sheet body 201, one side of the perforated sheet body 201 is connected to the thin shaft 215, and the pull rope 3 passes through a hole of the perforated sheet body 201. When the button shaft is pressed and moves up and down during use, the perforated sheet body is driven to move up and down. Since the pull rope has passed through a perforated sheet, the pull rope can move up and down with the limit component, so that the pull rope can be wound around the rotary discs with different diameters more accurately and conveniently, while the spring has a reset effect, and rebounds and resets when the button shaft is released. The shape of the perforated sheet here can be set freely according to requirements, or other methods can be used to guide the pull rope, such as a gap, and an open slot.

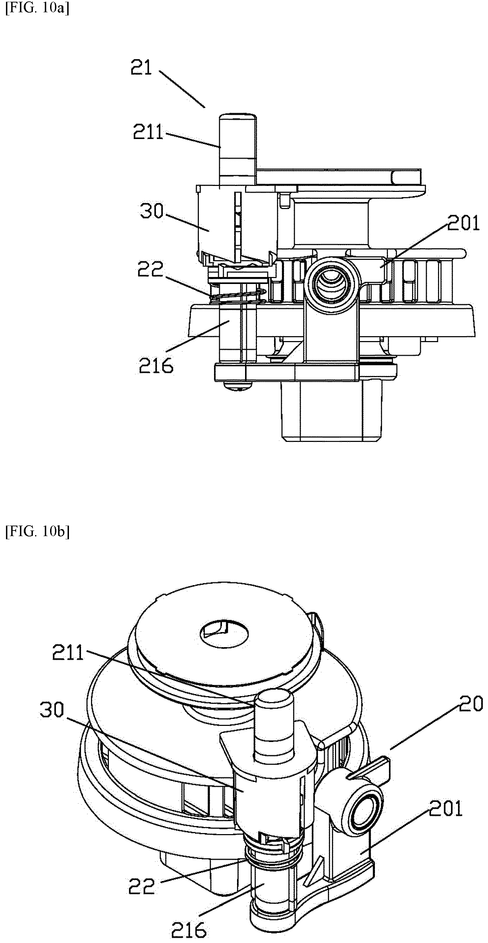

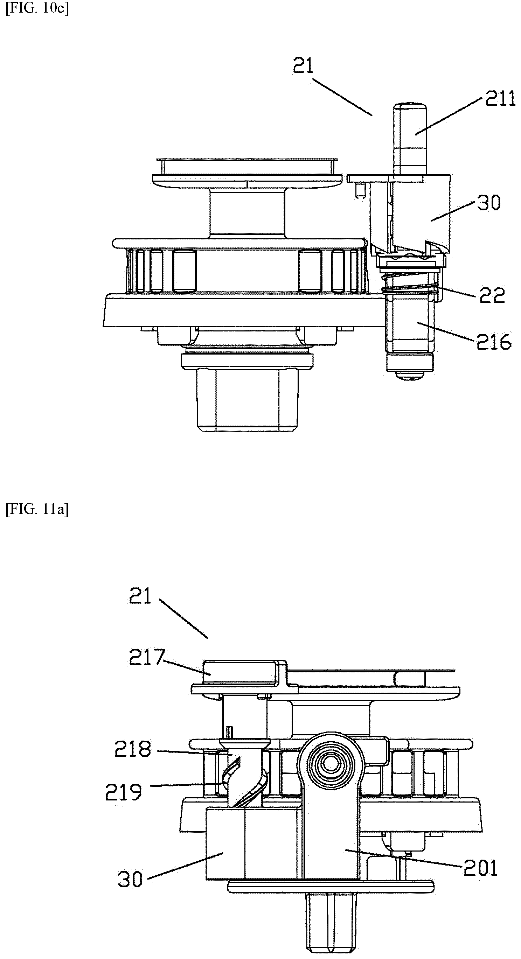

Fig. 10a to Fig. 10c show a button solution with locked shafts. The control module 21 is a button structure of a ball pen, which uses the corresponding structure of the button type ball pen as the structure of the control module. The control module comprises a button shaft 211, the button shaft 211 is coaxially sheathed with a conduit slot 30 with a serrated bottom, the button shaft 211 is sheathed with a spring 22 used for reset, and a movable column 216 that moves up and down is connected below the button shaft through a spring 22; the limit component 20 is a laterally arranged perforated sheet body 201, one side of the perforated sheet body 201 is connected to the movable column 216, and the pull rope 3 passes through a hole of the perforated sheet body 201. In this embodiment, a common locking structure on a ball pen is used as the structure of the control module. It is locked with a single press and unlocked with double press and meanwhile the limit component is driven to move up and down, and the pull rope can move up and down with the limit component, so that the pull rope can be wound around the rotary discs with different diameters more accurately and conveniently.

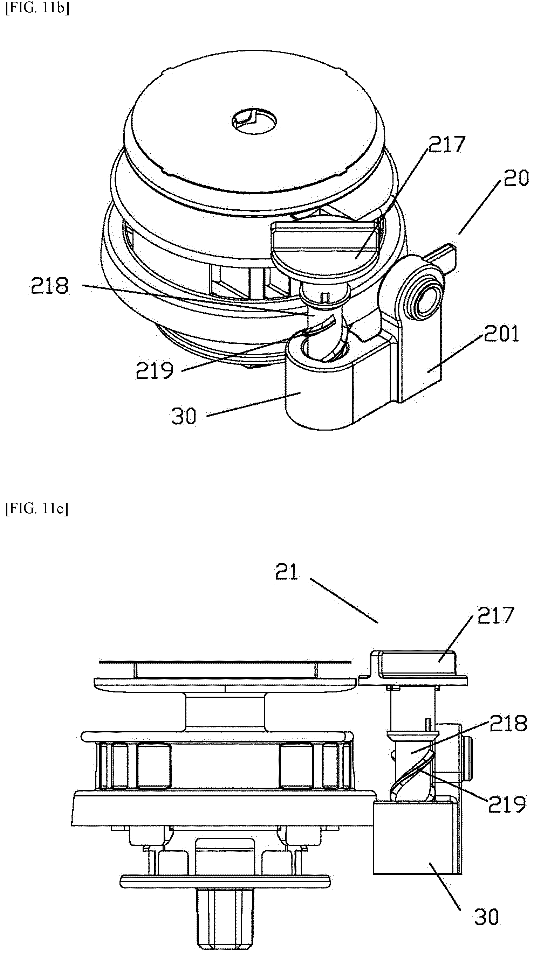

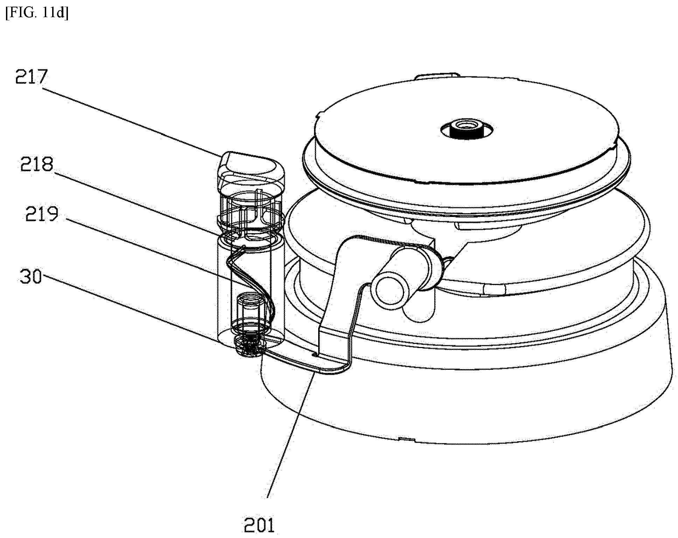

Fig. 11a to Fig. 11c show a button reset solution. The control module 21 comprises a knob shaft 217, above the knob shaft 217 is a knob, a shaft body 218 is connected below the knob, a first guide structure 219 is provided outside the shaft body 218, the shaft body 218 is sheathed with a conduit slot 30, the inner side of the conduit slot 30 is provided with a second guide structure (not shown in the figure) that matches the first guide structure 219, and by relying on the interaction between the first guide structure 219 and the second guide structure, the knob shaft 217 is rotated to drive the conduit slot 30 to move up and down; the guide structure 20 is a laterally arranged perforated sheet body 201, one side of the perforated sheet body 201 is connected to the conduit slot 30, and the pull rope 3 passes through a hole of the perforated sheet body 201. The first guide structure 219 may be a threaded or tapered convex bone or groove, and the second guide structure is a corresponding threaded or tapered groove or convex bone. During use, the knob shaft is rotated, and the conduit slot moves through the matched first guide structure and second guide structure to drive the perforated sheet to move up and down, while the pull rope moves up and down with the limit component, so that the pull rope can be wound around the rotary discs with different diameters more accurately and conveniently. Fig. 11d provides another button reset solution, of which structure is similar to the structures shown in the foregoing Fig. 11a to Fig. 11c, so it is not described again.

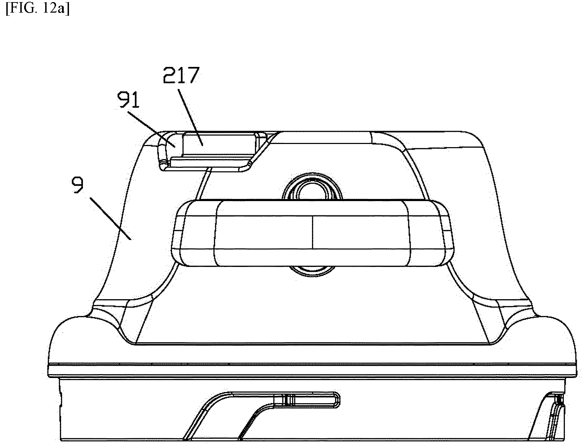

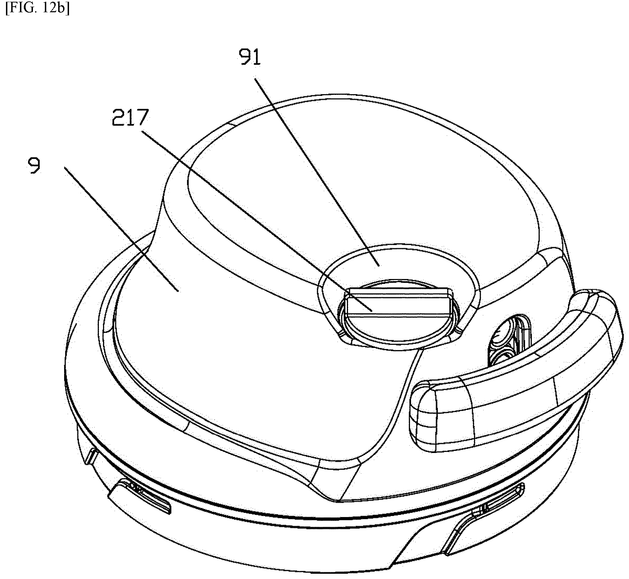

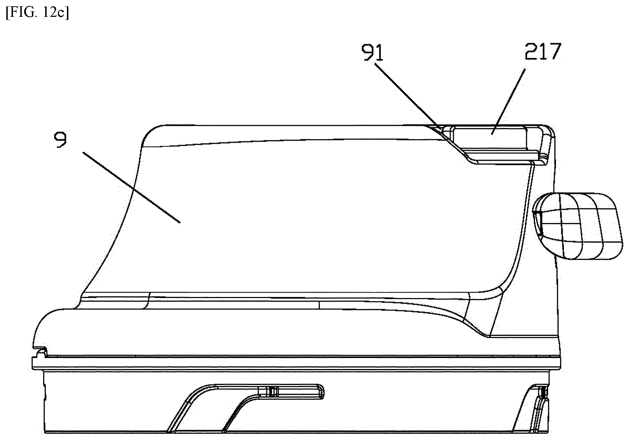

In addition, for the foregoing solutions with a guide structure, when used as a food processor, as shown in Fig. 12a to Fig. 12c, it is preferred to arrange the transmission system on the top of the entire food processor, that is, the food processing device is connected below the transmission shaft, and above the transmission shaft is an outer cover 9, the upper surface of the outer cover 9 is provided with a through hole 91 to expose the guide structure, and the knob of the knob shaft is exposed in this drawing. The transmission system is more hygienic and aesthetic. During use, the top cover can be pressed with one hand and the pull rope can be pulled with the other hand, which is more in line with the requirements of ergonomics.

To sum up, the present invention provides a brand-new non-electric pull type transmission system, which can be used a core structure to make various kinds of food processors. The non-electric pull type gear shifting transmission system has a simple structure. The corresponding rotating gears can be changed through simple up-down pulling actions without having to shut down and replace equipment or interrupt the pulling operation, making the use more convenient.

## Claims

1. A pull type transmission system, wherein the pull type transmission system comprises a pull mechanism (1), the pull mechanism (1) comprising a coaxial column, the coaxial column is formed by connecting rotary discs (11) with different diameters, and planes connecting the rotary discs (11) with different diameters are connecting faces (12);
the pull mechanism (1) is provided with a rope tying position (2), the rope tying position (2) is arranged on a side face of the pull mechanism (1), and a pull rope (3) is connected to the pull mechanism (1) through the rope tying position (2) at one end and is wound around one of the rotary discs (11);
the transmission system is further provided with a guide structure, the guide structure comprises a limit component (20) allowing the pull rope (3) to pass through and limiting the pull rope (3), and a control module (21) controlling the up and down movement of the limit component (20), and the pull rope (3) passes through the limit component (20) and the position of the limit component (20) is controlled by the control module (21), thereby controlling the position of the pull rope (3); and
the pull mechanism (1) is connected to a resilience mechanism (4) providing a resilience force and is capable of retracting the pull rope (3) to a different rotary disc after the pull rope (3) is pulled out.

2. The pull type transmission system according to claim 1, wherein the connecting faces (12) extend outward and are provided with a flange (121) protruding outward.

3. The pull type transmission system according to claim 1, wherein the rope tying position is adjacent to the connecting faces (12) and located above or below the connecting faces (12).

4. The pull type transmission system according to claim 3, wherein the rope tying position (2) is a structure that runs through the rotary discs (11), and the pull rope (3) extends outward from the rotary discs (11).

5. The pull type transmission system according to claim 1, wherein the resilience mechanism (4) is a set of coil springs and arranged above or below the pull mechanism (1).

6. The pull type transmission system according to claim 1, wherein the control module (21) comprises a button shaft (211), below the button shaft (211) is a second shaft (212), the diameter of the second shaft (212) is smaller than the diameter of the button shaft (211), a third shaft (213) is provided at a certain distance below the second shaft (212), the third shaft (213) and the second shaft (212) have the same diameter, and the second shaft (212) and the third shaft (213) are sheathed with a spring (22); a platform (214) is connected below the third shaft (213), and the lower end of the spring (22) presses against the platform (214);
the limit component (20) is a laterally arranged perforated sheet body (201), one side of the perforated sheet body (201) is connected to the button shaft (211), and the pull rope (3) passes through a hole of the perforated sheet body.

7. The pull type transmission system according to claim 1, wherein the control module (21) comprises a button shaft (211), the button shaft (211) is coaxially sheathed with a conduit slot (30), a thin shaft (215) is connected below the button shaft (211), the thin shaft (215) is sheathed with a spring (22), the top of the spring (22) presses against the bottom of the button shaft (215), and the bottom of the spring presses against a bottom platform (214) on the inner side of the conduit slot (30);
the limit component (20) is a laterally arranged perforated sheet body (201), one side of the perforated sheet body (201) is connected to the thin shaft (215), and the pull rope (3) passes through a hole of the perforated sheet body (201).

8. The pull type transmission system according to claim 1, wherein the control module (21) is a button structure of a ball pen, and comprises a button shaft, (211) the button shaft (211) is coaxially sheathed with a conduit slot (30) with a serrated bottom, the button shaft (211) is sheathed with a spring (22) used for reset, and a movable column (216) that moves up and down is connected below the button shaft (211) through a spring (22);
the limit component (20) is a laterally arranged perforated sheet body (201), one side of the perforated sheet body (201) is connected to the movable column (216), and the pull rope (3) passes through a hole of the perforated sheet body (201).

9. The pull type transmission system according to claim 1, wherein the control module (21) comprises a knob shaft (217), above the knob shaft (217) is a knob, a shaft body (218) is connected below the knob, a first guide structure (211) is provided outside the shaft body (218), the shaft body (218) is sheathed with a conduit slot (30), the inner side of the conduit slot (30) is provided with a second guide structure that matches the first guide structure (219), and by relying on the interaction between the first guide structure (219) and the second guide structure, the knob shaft (217) is rotated to drive the conduit slot (30) to move up and down;
the limit component is a laterally arranged perforated sheet body (201), one side of the perforated sheet body (201) is connected to the conduit slot (30), and the pull rope (3) passes through a hole of the perforated sheet body (201).

10. The pull type transmission system according to claim 9, wherein the first guide structure (219) is a threaded or tapered convex bone or groove, and the second guide structure is a threaded or tapered groove or convex bone.

11. A food processor, wherein the food processor comprises a pull type transmission system as described in claims 1 to 5, the pull mechanism (1) is connected to a transmission mechanism, and the transmission mechanism is connected to a food processing device that is operated in a rotating manner.

12. The food processor according to claim 11, wherein the food processor is further provided with a bottom cover (7), the center of the bottom cover (7) is connected to a resilience mechanism (4), the bottom cover (7) is connected to the pull mechanism (1), the pull mechanism (1) is sheathed with an upper cover (8) that covers the pull mechanism (1), the upper cover (8) comprises a top surface (81) at the top and a side wall (82) on the side face, the bottom edge of the side wall (82) is connected to the bottom cover (7), and the side wall (82) of the upper cover (8) is provided with a guide groove (83) allowing the pull rope (3) to pass through.

13. The food processor according to claim 12, wherein the guide groove (83) is arranged at same level with the rope tying position (2), the guide groove (83) is a longitudinal guide groove, and the length of the guide groove (83) spans the rotary discs (11) with different diameters;
the outer end of the pull rope (3) is connected to a handle (31), and the length of the handle (31) is greater than the length of the longitudinal guide groove (83).

14. The food processor according to claim 11, wherein the transmission mechanism is a rotating shaft or a transmission shaft (5) connected to a one-way gear, and the upper part of the transmission shaft (5) passes through the top surface (81) of the upper cover (8) and is connected to the food processing device.

15. A food processor, wherein the food processor comprises a pull type transmission system as described in claims 6 to 10, the pull mechanism is connected to a transmission mechanism, and the transmission mechanism is connected to a food processing device that is operated in a rotating manner; the transmission mechanism is a rotating shaft or a transmission shaft (5) connected to a one-way gear, the food processing device is connected below the transmission shaft (5), and above the transmission shaft is an outer cover (9), and the upper plane of the outer cover (9) is provided with a through hole (91) to expose the guide structure.

## Patentansprüche

1. Zugkraftübertragungssystem, wobei das Zugkraftübertragungssystem einen Zugmechanismus (1) umfasst, der Zugmechanismus (1) umfassend eine koaxiale Säule, wobei die koaxiale Säule durch Verbinden von Drehscheiben (11) mit unterschiedlichen Durchmessern gebildet ist, und wobei Ebenen, die die Drehscheiben (11) mit unterschiedlichen Durchmessern verbinden, Verbindungsflächen (12) sind;
wobei der Zugmechanismus (1) mit einer Seilbindeposition (2) versehen ist, die Seilbindeposition (2) an einer Seitenfläche des Zugmechanismus (1) angeordnet ist, und ein Zugseil (3) durch die Seilbindeposition (2) an einem Ende mit dem Zugmechanismus (1) verbunden ist und um eine der Drehscheiben (11) gewickelt ist;
wobei das Übertragungssystem ferner mit einer Führungsstruktur versehen ist, die Führungsstruktur eine Begrenzungskomponente (20), die den Durchgang des Zugseils (3) ermöglicht und das Zugseil (3) begrenzt, und ein Steuermodul (21), das die Auf - und Abwärtsbewegung der Begrenzungskomponente (20) steuert, und das Zugseil (3) durch die Begrenzungskomponente (20) verläuft und die Position der Begrenzungskomponente (20) durch das Steuermodul (21) gesteuert wird, wodurch die Position des Zugseils (3) gesteuert wird, umfasst; und
wobei der Zugmechanismus (1) mit einem Federmechanismus (4) verbunden ist, der eine Federkraft bereitstellt und in der Lage ist, das Zugseil (3) nach Herausziehen des Zugseils (3) auf eine andere Drehscheibe zurückzuziehen.

2. Zugkraftübertragungssystem nach Anspruch 1, wobei sich die Verbindungsflächen (12) nach außen erstrecken und mit einem nach außen hervorstehenden Flansch (121) versehen sind.

3. Zugkraftübertragungssystem nach Anspruch 1, wobei die Seilbindeposition angrenzend an die Verbindungsflächen (12) und oberhalb oder unterhalb der Verbindungsflächen (12) angeordnet ist.

4. Zugkraftübertragungssystem nach Anspruch 3, wobei die Seilbindeposition (2) eine Struktur ist, die durch die Drehscheiben (11) verläuft, und das Zugseil (3) sich von den Drehscheiben (11) nach außen erstreckt.

5. Zugkraftübertragungssystem nach Anspruch 1, wobei der Federmechanismus (4) ein Satz von Schraubenfedern ist und oberhalb oder unterhalb des Zugmechanismus (1) angeordnet ist.

6. Zugkraftübertragungssystem nach Anspruch 1, wobei das Steuermodul (21) eine Knopfwelle (211) umfasst, sich unterhalb der Knopfwelle (211) eine zweite Welle (212) befindet, der Durchmesser der zweiten Welle (212) kleiner ist als der Durchmesser der Knopfwelle (211), eine dritte Welle (213) in einem bestimmten Abstand unterhalb der zweiten Welle (212) bereitgestellt ist, die dritte Welle (213) und die zweite Welle (212) denselben Durchmesser aufweisen und die zweite Welle (212) und die dritte Welle (213) mit einer Feder (22) ummantelt sind; eine Plattform (214) unterhalb der dritten Welle (213) verbunden ist, und das untere Ende der Feder (22) gegen die Plattform (214) drückt;
die Begrenzungskomponente (20) ein seitlich angeordneter Lochblechkörper (201) ist, eine Seite des Lochblechkörpers (201) mit der Knopfwelle (211) verbunden ist und das Zugseil (3) durch ein Loch des Lochblechkörpers verläuft.

7. Zugkraftübertragungssystem nach Anspruch 1, wobei das Steuermodul (21) eine Knopfwelle (211) umfasst, die Knopfwelle (211) koaxial mit einem Leitungsschlitz (30) ummantelt ist, eine dünne Welle (215) unter der Knopfwelle (211) verbunden ist, die dünne Welle (215) mit einer Feder (22) ummantelt ist, die Oberseite der Feder (22) gegen die Unterseite der Knopfwelle (215) drückt und die Unterseite der Feder gegen eine Bodenplattform (214) auf der Innenseite des Leitungsschlitzes (30) drückt;
die Begrenzungskomponente (20) ein seitlich angeordneter Lochblechkörper (201) ist, eine Seite des Lochblechkörpers (201) mit der dünnen Welle (215) verbunden ist und das Zugseil (3) durch ein Loch des Lochblechkörpers (201) verläuft.

8. Zugkraftübertragungssystem nach Anspruch 1, wobei das Steuermodul (21) eine Knopfstruktur eines Kugelschreibers ist und einen Knopfwelle (211) umfasst, wobei die Knopfwelle (211) koaxial mit einem Leitungsschlitz (30) mit einem gezackten Boden ummantelt ist, wobei die Knopfwelle (211) mit einer Feder (22) ummantelt ist, die zum Zurücksetzen verwendet wird, und wobei eine bewegbare Säule (216), die sich auf und ab bewegt, durch eine Feder (22) unter der Knopfwelle (211) verbunden ist;
die Begrenzungskomponente (20) ein seitlich angeordneter Lochblechkörper (201) ist, eine Seite des Lochblechkörpers (201) mit der bewegbaren Säule (216) verbunden ist und das Zugseil (3) durch ein Loch des Lochblechkörpers (201) verläuft.

9. Zugkraftübertragungssystem nach Anspruch 1, wobei das Steuermodul (21) eine Drehknopfwelle (217) umfasst, oberhalb der Drehknopfwelle (217) ein Drehknopf ist, ein Wellenkörper (218) unterhalb des Drehknopfs verbunden ist, eine erste Führungsstruktur (211) außerhalb des Wellenkörpers (218) bereitgestellt ist, der Wellenkörper (218) mit einem Leitungsschlitz (30) ummantelt ist, die Innenseite des Leitungsschlitzes (30) mit einer zweiten Führungsstruktur versehen ist, die mit der ersten Führungsstruktur (219) übereinstimmt, und durch das Zusammenwirken zwischen der ersten Führungsstruktur (219) und der zweiten Führungsstruktur die Drehknopfwelle (217) gedreht wird, um den Leitungsschlitz (30) nach oben und unten zu bewegen;
die Begrenzungskomponente ein seitlich angeordneter Lochblechkörper (201) ist, eine Seite des Lochblechkörpers (201) mit dem Leitungsschlitz (30) verbunden ist und das Zugseil (3) durch ein Loch des Lochblechkörpers (201) verläuft.

10. Zugkraftübertragungssystem nach Anspruch 9, wobei die erste Führungsstruktur (219) ein mit Gewinde versehener oder konisch zulaufender konvexer Knochen bzw. Nut ist,
und die zweite Führungsstruktur eine mit Gewinde versehene oder sich verjüngende Nut bzw. konvexer Knochen ist.

11. Küchenmaschine, wobei die Küchenmaschine ein Zugkraftübertragungssystem nach den Ansprüchen 1 bis 5 umfasst, der Zugmechanismus (1) mit einem Übertragungsmechanismus verbunden ist und der Übertragungsmechanismus mit einer Lebensmittelverarbeitungsvorrichtung verbunden ist, die auf eine drehende Weise betrieben wird.

12. Küchenmaschine nach Anspruch 11, wobei die Küchenmaschine ferner mit einer unteren Abdeckung (7) versehen ist, die Mitte der unteren Abdeckung (7) mit einem Rückstellmechanismus (4) verbunden ist, die untere Abdeckung (7) mit dem Zugmechanismus (1) verbunden ist, der Zugmechanismus (1) mit einer oberen Abdeckung (8) ummantelt ist, die den Zugmechanismus (1) abdeckt, die obere Abdeckung (8) eine obere Fläche (81) an der Oberseite und eine Seitenwand (82) an der Seitenfläche aufweist, der untere Rand der Seitenwand (82) mit der unteren Abdeckung (7) verbunden ist, und die Seitenwand (82) der oberen Abdeckung (8) mit einer Führungsnut (83) versehen ist, die es ermöglicht, dass das Zugseil (3) hindurch verläuft.

13. Küchenmaschine nach Anspruch 12, **dadurch gekennzeichnet, dass** die Führungsnut (83) auf gleicher Höhe mit der Seilbindeposition (2) angeordnet ist, dass die Führungsnut (83) eine Längsführungsnut ist und dass die Länge der Führungsnut (83) die Drehscheiben (11) mit unterschiedlichen Durchmessern überspannt;
das äußere Ende des Zugseils (3) mit einem Griff (31) verbunden ist und die Länge des Griffs (31) größer ist als die Länge der Längsführungsnut (83).

14. Küchenmaschine nach Anspruch 11, wobei der Übertragungsmechanismus eine drehende Welle oder eine Übertragungswelle (5) ist, die mit einem Einweggetriebe verbunden ist, und der obere Teil der Übertragungswelle (5) durch die obere Fläche (81) der oberen Abdeckung (8) verläuft und mit der Lebensmittelverarbeitungsvorrichtung verbunden ist.

15. Küchenmaschine, wobei die Küchenmaschine ein Zugkraftübertragungssystem nach den Ansprüchen 6 bis 10 umfasst, der Zugmechanismus mit einem Übertragungsmechanismus verbunden ist und der Übertragungsmechanismus mit einer Lebensmittelverarbeitungsvorrichtung verbunden ist, die auf eine drehende Weise betrieben wird. wobei der Übertragungsmechanismus eine drehende Welle oder eine Übertragungswelle (5) ist, die mit einem Einweggetriebe verbunden ist, die Lebensmittelverarbeitungsvorrichtung unterhalb der Übertragungswelle (5) verbunden ist und oberhalb der Übertragungswelle eine äußere Abdeckung (9) ist, und die obere Ebene der äußeren Abdeckung (9) mit einem Durchgangsloch (91) versehen ist, um die Führungsstruktur freizulegen.

## Revendications

1. Système de transmission du type à traction, le système de transmission du type à traction comprenant un mécanisme de traction (1), le mécanisme de traction (1) comprenant une colonne coaxiale, la colonne coaxiale étant formée par la liaison de disques rotatifs (11) de différents diamètres, et des plans reliant les disques rotatifs (11) de différents diamètres étant des faces de liaison (12) ;
le mécanisme de traction (1) comportant une position d'attache de corde (2), la position d'attache de corde (2) étant disposée sur une face latérale du mécanisme de traction (1), et une corde de traction (3) étant reliée au mécanisme de traction (1) à travers la position d'attache de corde (2) à une extrémité et étant enroulée autour de l'un des disques rotatifs (11) ;
le système de transmission comportant en outre une structure de guidage, la structure de guidage comprenant un élément de limitation (20) permettant à la corde de traction (3) de passer à travers et limitant la corde de traction (3), et un module de commande (21) commandant le mouvement vers le haut et vers le bas de l'élément de limitation (20), et la corde de traction (3) passant à travers l'élément de limitation (20) et la position de l'élément de limitation (20) étant commandée par le module de commande (21), permettant ainsi de commander la position de la corde de traction (3) ; et
le mécanisme de traction (1) étant relié à un mécanisme de résilience (4) fournissant une force élastique et étant capable de rétracter la corde de traction (3) sur un disque rotatif différent après que la corde de traction (3) a été tirée.

2. Système de transmission du type à traction selon la revendication 1, dans lequel les faces de liaison (12) s'étendent vers l'extérieur et comportent une bride (121) faisant saillie vers l'extérieur.

3. Système de transmission du type à traction selon la revendication 1, dans lequel la position d'attache de corde est adjacente aux faces de liaison (12) et située au-dessus ou au-dessous des faces de liaison (12).

4. Système de transmission du type à traction selon la revendication 3, dans lequel la position d'attache de corde (2) est une structure qui s'étend à travers les disques rotatifs (11), et la corde de traction (3) s'étend vers l'extérieur des disques rotatifs (11).

5. Système de transmission du type à traction selon la revendication 1, dans lequel le mécanisme de résilience (4) est un ensemble de ressorts hélicoïdaux et est disposé au-dessus ou au-dessous du mécanisme de traction (1).

6. Système de transmission du type à traction selon la revendication 1, dans lequel le module de commande (21) comprend un arbre à bouton (211), sous l'arbre à bouton (211) se trouve un deuxième arbre (212), le diamètre du deuxième arbre (212) est plus petit que le diamètre de l'arbre à bouton (211), un troisième arbre (213) est disposé à une certaine distance sous le deuxième arbre (212), le troisième arbre (213) et le deuxième arbre (212) ont le même diamètre, et le deuxième arbre (212) et le troisième arbre (213) sont gainés par un ressort (22) ; une plate-forme (214) est reliée au-dessous du troisième arbre (213), et l'extrémité inférieure du ressort (22) presse contre la plate-forme (214) ;
l'élément de limitation (20) est un corps de tôle perforée (201) disposé latéralement, un côté du corps de tôle perforée (201) est relié à l'arbre à bouton (211), et la corde de traction (3) passe à travers un trou du corps de tôle perforée.

7. Système de transmission à traction selon la revendication 1, dans lequel le module de commande (21) comprend un arbre à bouton (211), l'arbre à bouton (211) est gainé coaxialement par une fente à conduite (30), un arbre mince (215) est relié sous l'arbre à bouton (211), l'arbre mince (215) est gainé par un ressort (22), la partie supérieure du ressort (22) presse contre la partie inférieure de l'arbre à bouton (215), et la partie inférieure du ressort presse contre une plate-forme inférieure (214) sur le côté intérieur de la fente à conduite (30) ;
l'élément de limitation (20) est un corps de tôle perforée (201) disposé latéralement, un côté du corps de tôle perforée (201) est relié à l'arbre mince (215), et la corde de traction (3) passe à travers un trou du corps de tôle perforée (201).

8. Système de transmission du type à traction selon la revendication 1, dans lequel le module de commande (21) est une structure à bouton d'un stylo à bille, et comprend un arbre à bouton (211), l'arbre à bouton (211) est gainé coaxialement par une fente à conduite (30) avec une partie inférieure dentelée, l'arbre à bouton (211) est gainé par un ressort (22) utilisé pour la réinitialisation, et une colonne mobile (216) qui se déplace vers le haut et vers le bas est reliée au-dessous de l'arbre à bouton (211) par l'intermédiaire d'un ressort (22) ;
l'élément de limitation (20) est un corps de tôle perforée (201) disposé latéralement, un côté du corps de tôle perforée (201) est relié à la colonne mobile (216), et la corde de traction (3) passe à travers un trou du corps de tôle perforée (201).

9. Système de transmission du type à traction selon la revendication 1, dans lequel le module de commande (21) comprend un arbre à molette (217), au-dessus de l'arbre à molette (217) se trouve une molette, un corps d'arbre (218) est relié au-dessous de la molette, une première structure de guidage (211) est disposée à l'extérieur du corps d'arbre (218), le corps d'arbre (218) est gainé par une fente à conduite (30), le côté interne de la fente à conduite (30) comporte une seconde structure de guidage qui est en correspondance avec la première structure de guidage (219), et en s'appuyant sur l'interaction entre la première structure de guidage (219) et la seconde structure de guidage, l'arbre à molette (217) est entraîné en rotation pour entraîner la fente à conduite (30) à se déplacer vers le haut et vers le bas ;
l'élément de limitation est un corps de tôle perforée (201) disposé latéralement, un côté du corps de tôle perforée (201) est relié à la fente à conduite (30), et la corde de traction (3) passe à travers un trou du corps de tôle perforée (201).

10. Système de transmission du type à traction selon la revendication 9, dans lequel la première structure de guidage (219) est une arête convexe ou rainure filetée ou conique, et la seconde structure de guidage est une rainure ou arête convexe filetée ou conique.

11. Robot de cuisine, le robot de cuisine comprenant un système de transmission du type à traction tel que décrit aux revendications 1 à 5, le mécanisme de traction (1) étant relié à un mécanisme de transmission, et le mécanisme de transmission étant relié à un dispositif de traitement des aliments qui est actionné de manière rotative.

12. Robot de cuisine selon la revendication 11, dans lequel le robot de cuisine est en outre équipé d'un couvercle inférieur (7), le centre du couvercle inférieur (7) est relié à un mécanisme de résilience (4), le couvercle inférieur (7) est relié au mécanisme de traction (1), le mécanisme de traction (1) est gainé par un couvercle supérieur (8) qui recouvre le mécanisme de traction (1), le couvercle supérieur (8) comprend une surface supérieure (81) à la partie supérieure et une paroi latérale (82) sur la face latérale, le bord inférieur de la paroi latérale (82) est relié au couvercle inférieur (7), et la paroi latérale (82) du couvercle supérieur (8) comporte une rainure de guidage (83) permettant à la corde de traction (3) de passer à travers.

13. Robot de cuisine selon la revendication 12, dans lequel la rainure de guidage (83) est disposée au même niveau que la position d'attache de corde (2), la rainure de guidage (83) est une rainure de guidage longitudinale, et la longueur de la rainure de guidage (83) couvre les disques rotatifs (11) de différents diamètres ;
l'extrémité extérieure de la corde de traction (3) est reliée à une poignée (31), et la longueur de la poignée (31) est supérieure à la longueur de la rainure de guidage longitudinale (83) .

14. Robot de cuisine selon la revendication 11, dans lequel le mécanisme de transmission est un arbre rotatif ou un arbre de transmission (5) relié à un engrenage unidirectionnel, et la partie supérieure de l'arbre de transmission (5) traverse la surface supérieure (81) du couvercle supérieur (8) et est reliée au dispositif de traitement des aliments.

15. Robot de cuisine, le robot de cuisine comprenant un système de transmission du type à traction tel que décrit aux revendications 6 à 10, le mécanisme de traction étant relié à un mécanisme de transmission, et le mécanisme de transmission étant relié à un dispositif de traitement des aliments qui est actionné de manière rotative ; le mécanisme de transmission étant un arbre rotatif ou un arbre de transmission (5) relié à un engrenage unidirectionnel, le dispositif de traitement des aliments étant relié au-dessous de l'arbre de transmission (5), et au-dessus de l'arbre de transmission se trouve un couvercle extérieur (9), et le plan supérieur du couvercle extérieur (9) comporte un trou traversant (91) afin d'exposer la structure de guidage.
